# EUROPÄISCHE PATENTSCHRIFT

(11) **EP 0 491 150 B1**
(45) Veröffentlichungstag und Bekanntmachung des Hinweises auf die Patenterteilung: **11.01.1995**
(21) Anmeldenummer: 91118813.4
(22) Anmeldetag: 05.11.1991
(51) Int. Cl.: H01M 10/12, H01M 10/10

(54) **Verfahren zur Herstellung eines Bleiakkumulators mit einem als Gel festgelegten Schwefelsäureelektrolyten**
Process for making a lead accumulator with gelified sulphuric acid electrolyte
Procédé de fabrication d'un accumulation au plomb à électrolyte gélifié contenant de l'acide sulfurique

(30) Priorität: 15.12.1990 DE 4040202
(43) Veröffentlichungstag der Anmeldung: 24.06.1992
(73) Patentinhaber: VARTA Batterie Aktiengesellschaft, D-30405 Hannover (DE)
(72) Erfinder: Bechtold, Dieter, Dipl.-Ing., W-6368 Bad Vilbel (DE); Vollbert, Jürgen, Phys., W-6234 Hattersheim (DE)
(74) Vertreter: Kaiser, Dieter Ralf, Dipl.-Ing.

(56) Entgegenhaltungen:
- EP-A- 0 272 474
- WO-A-86/07496
- BE-A- 432 980
- DE-A- 3 603 196
- GB-A- 2 088 623
- US-A- 4 687 718
- US-A- 4 871 428

## Beschreibung

Die Erfindung betrifft ein Verfahren zur Herstellung eines Bleiakkumulators mit einem im wesentlichen aus Schwefelsäure und einem Gelbildner bestehenden thixotropen Gel als Elektrolyt.

Solche Bleibatterien besitzen die verschiedensten Bauformen, die durch die Elektrodenbauweise - Gitterplatten, Kastenplatten, Röhrchenplatten etc. - bestimmt sind oder dem speziellen Einsatz, z.B. als Traktionsbatterie, Starterbatterie oder ortsfeste Industriebatterie Rechnung tragen. Ein Teil dieser Batterien ist heute dicht verschlossen und wartungsfrei.

Die Immobilisierung des Säureelektrolyten durch einen Zusatz an hochdisperser, pyrolytisch erzeugter Kieselsäure ist eine wichtige Voraussetzung für den wartungsfreien Betrieb des Akkumulators, da die von zahlreichen freien Poren und Kanälen durchsetzte Gallerte dem parasitär entwickelten Sauerstoffgas die notwendigen Transportwege zu den negativen Elektroden darbietet, um an deren Oberfläche dem elektrochemischen Verzehr zugeführt werden zu können.

Da sich die Gelbildung in Schwefelsäure hoher Dichte wesentlich rascher vollzieht als in verdünnter Säure, ist man gezwungen, den Gelbildner über eine Säure niederer Dichte in das mit den Elektroden bereits bestückte Zellengefäß einzubringen, um den Solzustand zumindest bis zur Beendigung des Füllprozesses aufrechtzuerhalten, da sonst keine vollständige Ausfüllung des Elektrolytraumes nach der Sol-Gel-Umwandlung gewährleistet ist.

Das Einfüllen eines Schwefelsäure-Sols, welches bereits die gewünschte Endsäuredichte aufweist, gelingt nur dann, wenn die entsprechende Mischung unter Kühlung hergestellt und noch im kalten Zustand unter Vakuum in die Zelle eingebracht wird.

In der Regel werden die positiven und negativen Elektroden im geladenen Zustand in die endgültigen Batteriebehältnisse eingebaut, nämlich in dem Zustand, in dem sie, von einer vorhergehenden Waschung und Trocknung abgesehen, den Formationsgefäßen entnommen wurden. Offene Akkumulatoren mit Flüssigelektrolyt wären dann nach Befüllen mit einer Säure der Dichte 1,22 bis 1,28 kg/l, wie sie im geladenen Bleiakkumulator vorliegt, betriebsbereit.

Die Bereitstellung einer betriebsfertigen Gel-Batterie verlangt dagegen umständliche Maßnahmen. So muß gemäß DE-PS 30 41 953 in einer gefüllten und geladenen Akkumulatorenzelle eine verdünnte Schwefelsäure durch Entladen der Zelle überhaupt erst erzeugt und durch Auskippen verfügbar gemacht werden, um sie mit dem Gelbildner zu verrühren und darauf in die Zelle zurückzugeben. Nach Wiederaufladung ist die Zelle betriebsbereit und besitzt einen Gel-Elektrolyten.

Gemäß DE-PS 35 10 200 werden zunächst nur die eingebauten Elektrodenplatten und Separatoren mit einer hochkonzentrierten, gelfreien Schwefelsäure getränkt und dann der noch freie Elektrolytraum mit einem thixotropen Gel aus verdünnter Schwefelsäure und einem pyrogenen Kieselsäurezusatz gefüllt. Durch den anschließenden Konzentrationsausgleich, dem noch eine kurze Strombeaufschlagung der Zelle in Entladerichtung folgt, wird das feste Gel gebildet.

Der Erfindung liegt die Aufgabe zugrunde, im Hinblick auf einen rationellen Fertigungsprozeß das zeitaufwendige Operieren mit zwei flüssigen Elektrolytphasen bei der Beschickung des Akkumulators mit dem Gelelektrolyt, verbunden mit zusätzlichen elektrischen Behandlungsschritten, durch ein einfacheres Verfahren zu ersetzen.

Die Aufgabe wird erfindungsgemäß durch ein Verfahren gelöst, wie es im Patentanspruch 1 definiert ist.

Es hat sich nämlich gezeigt, daß es möglich ist, die Formation der Elektrodenplatten mit einer bereits ein thixotropes Gel enthaltenden Schwefelsäure durchzuführen. Dadurch entfällt der bei den herkömmlichen Akkumulatoren mit Flüssigelektrolyt nach der Formation anstehende Elektrolytwechsel bzw. die notwendige Entfernung der Formiersäure sowie Wässerung und Trocknung der Platten, wenn der Akkumulator als geladen und trocken lagerfähig auf Lager genommen werden soll.

Das neue Verfahren vereinigt die Formation der Platten und die Säurebefüllung der Batterie zu einem einzigen Arbeitsschritt, denn die Formiersäure, die im Verlaufe des Formationsprozesses zu gelifizieren beginnt, bildet später den Zellenelektrolyt.

Das Formationsverfahren selbst bleibt im wesentlichen das gleiche wie beim Herstellungsprozeß für übliche Akkumulatoren. Zu seiner Durchführung werden positive und negative Elektroden, wie bei der Blockkastenformation üblich, in den endgültigen Batteriebehälter eingebaut. Da ihr aktives Material noch nicht gebildet ist, besteht ihre Masse aus verschiedenen Oxiden und basischen Sulfaten des Bleis, z.B. Mennige, Pb₃O₄, bei Röhrchenelektroden oder den Bleiverbindungen 3 PbO · H₂O · PbSO₄ und 4 PbO · PbSO₄ bei pastierten Gitterplatten, nachdem diese zuvor einen Reifungsprozeß (Curing) durchlaufen haben.

Nach Herstellung der elektrischen Kontakte und Verbinder zwischen den gleichpoligen Elektroden wird der Batteriebehälter mit verdünnter Schwefelsäure, in die durch Verrühren 3 Gew.% bis 10 Gew.% pyrogene Kieselsäure als Gelbildner in fein dispergierter Form eingebracht wurden, aufgefüllt. Die Dichte dieser Säure ist so zu bemessen, daß am Ende der Formation die normale Betriebssäuredichte einer geladenen Batterie erreicht wird. Wie bei Batterien mit einem Flüssigelelektrolyten auch, muß hierbei die Größe des von den Elektroden nicht beanspruchten Zellvolumens, das von der Elektrodenbauart und Packungsdichte abhängt, berücksichtigt werden.

Die Elektroden werden nunmehr der Zusammenformation mit Strömen der hierbei üblichen Größe unterworfen. Die Batterietemperatur sollte im Bereich 40°C bis 50°C liegen. Zu seiner Einhaltung kann entweder eine Kühlung eingesetzt oder die Formierstromstärke verringert werden. Im letzteren Fall ist die Formationszeit etwas länger. Im übrigen hängt die Formationszeit von der Plattenart, der Vorbehandlung und der Massezusammensetzung ab. Sie kann zwischen 12 und 72 Stunden liegen.

Während die Platten so in Gegenwart des kolloiddispersen Geldbildners ihre erste Ladung erhalten, setzt mit der beginnenden Aufkonzentrierung der Schwefelsäure auch die Sol-Gel-Umwandlung ein.

Mit fortschreitender Formation nimmt die Viskosität der Formiersäure zu; sie bleibt jedoch durch den Rühreffekt der aus den Platten aufsteigenden Gasblasen bis zum Ende des Formationsprozesses weitgehend beweglich. Danach wird die Formiersäure zum festen Gel und bildet den Elektrolyten der geladenen und betriebsbereiten Gelzelle.

Die Betriebssäuredichte liegt zwischen 1,24 und 1,29 kg/l.

Ein Vergleich der nach der Säuregel-Formation gemäß der Erfindung sich einstellenden Kapazitäten und Spannungslagen mit denjenigen, die bei der herkömmlichen Säuregel-Befüllung gefunden werden, zeigt für die ersteren keine schlechteren Werte.

Das neue Verfahren hat den Vorteil, daß die üblichen Fertigungsmittel, die für traditionelle Batterien mit Flüssigelektrolyt eingesetzt werden, bis zur Elektrolytbefüllung Anwendung finden. Es ist naturgemäß, da die Formiersäure nicht wie nach einer Tankformation verworfen und durch eine neue Füllsäure ersetzt werden muß, auf Batterien abgestellt, welche der Blockkastenformation unterliegen. Dies bedeutet aber gerade für viele Batteriehersteller, insbesondere kleinere Fabriken, deren Betriebsmittel auf eine Blockkastenformation beschränkt sind, einen Vorteil.

Schließlich zeichnet sich die Formationsbehandlung unter gleichzeitiger Gelbildung nach dem erfindungsgemäßen Verfahren durch große Zuverlässigkeit aus, da die Stromanschlüsse zu den Platten bereits aus den durch Angießen sicher befestigten Polen und Polbrücken des fertigen Akkumulators bestehen, was einen gleichmäßigen Stromdurchgang durch alle Platten sicherstellt. Provisorische Anschlüsse, wie sie z.B bei der Tankformation unvermeidbar sind, gewährleisten eine so einwandfreie Kontaktierung für jede einzelne Elektrode nicht.

## Patentansprüche

1. Verfahren zur Herstellung eines Bleiakkumulators mit einem im wesentlichen aus Schwefelsäure und einem Gelbildner bestehenden thixotropen Gel als Elektrolyt, dadurch gekennzeichnet, daß anstelle von formierten positiven und negativen Elektrodenplatten gecurte und noch nicht formierte Platten unter Zwischenlage von Separatoren in das endgültige Zellen- oder Batteriegefäß zusammen mit den Stromanschlüssen wie Polen und Polbrücken eingebaut werden, daß der verbleibende Elektrolytraum mit verdünnter Schwefelsäure, die den späteren Zellenelektrolyten bildet und einen Gelbildner enthält, bis zur Füllhöhe der Zelle aufgefüllt wird und daß die positiven und negativen Elektrodenplatten anschließend mit einem Ladestrom formiert werden.

2. Verfahren nach Anspruch 1, dadurch gekennzeichnet, daß der Geldbildner auf pyrolytischem Wege erzeugte, kolloide Kieselsäure ist.

3. Verfahren nach Anspruch 2, dadurch gekennzeichnet, daß die Kieselsäure entweder in fester Form in der verdünnten Schwefelsäure durch Einrühren dispergiert wird oder als wässeriges Kieselsäuresol mit der verdünnten Schwefelsäure vermischt wird.

4. Verfahren nach Anspruch 3, dadurch gekennzeichnet, daß die Kieselsäurekonzentration in der verdünnten Schwefelsäure 3 Gew.% bis 10 Gew.% beträgt.

## Claims

1. Process for producing a lead accumulator having as an electrolyte a thixotropic gel substantially comprising sulphuric acid and a gelling agent, characterised in that there are incorporated into the final cell box or battery box, in lieu of formed positive and negative electrode plates, cured and as yet unformed plates with the interposition of separators, together with the current supply points such as terminals and terminal bars, in that the remaining electrolyte space is filled up to the filling height of the cell with dilute sulphuric acid which forms the subsequent cell electrolyte and contains a gelling agent, and in that the positive and negative electrode plates are then formed with a charging current.

2. Process according to Claim 1, characterised in that the gelling agent is colloidal silicic acid produced by a pyrolytic route.

3. Process according to Claim 2, characterised in that the silicic acid is either dispersed in solid form in the dilute sulphuric acid by stirring in or is mixed as aqueous silicic acid sol with the dilute sulphuric acid.

4. Process according to Claim 3, characterised in that the silicic acid concentration in the dilute sulphuric acid is from 3 to 10 wt-%.

## Revendications

1. Procédé pour la fabrication d'un accumulateur au plomb avec, comme électrolyte, un gel thixotrope constitué d'acide sulfurique et d'un gélifiant, procédé caractérisé en ce qu'au lieu de plaques d'électrodes positives et négatives formées, des plaques mâturées et non encore formées sont montées avec interposition de séparateurs dans les bacs de cellule ou les bacs de batterie définitifs conjointement avec les raccordements de courant tels que pôles et pôles polaires, en ce que le compartiment d'électrolyte subsistant est rempli jusqu'au niveau de remplissage prévu pour la cellule avec de l'acide sulfurique dilué, qui constitue l'électrolyte ultérieure des cellules et qui contient un gélifiant, et en ce que les plaques d'électrodes positives et négatives sont ensuite formées avec un courant de charge.

2. Procédé selon la revendication 1, caractérisé en ce que le gélifiant est de l'acide silicique colloïdal obtenu par voie pyrolytique.

3. Procédé selon la revendication 2, caractérisé en ce que l'acide silicique est soit dispersé par agitation sous forme solide dans l'acide sulfurique dilué, soit mélangé sous la forme de solutions aqueuses d'acide silicique avec l'acide sulfurique dilué.

4. Procédé selon la revendication 3, caractérisé en de que la concentration en acide silicique dans l'acide sulfurique dilué est de 3 à 10 % en poids.
